# EUROPEAN PATENT APPLICATION

(11) **EP 4 841 965 A1**
(43) Date of publication of application: **18.11.2026**
(21) Application number: 25205947.2
(22) Date of filing: 01.10.2025
(51) Int. Cl.: H04N 1/00, H04N 1/38, H04N 1/387, G06F 3/12

(54) **IMAGE PROCESSING SYSTEM, IMAGE PROCESSING APPARATUS, AND PROGRAM FOR SUPPRESSING PREPRINT PAPER LOSS**

(30) Priority: 14.05.2025 JP 2025081158
(71) Applicant: FUJIFILM Business Innovation Corp., Minato-ku Tokyo (JP)
(72) Inventor: YASUDA, Akiho, Yokohama-shi, Kanagawa (JP)
(74) Representative: Becker Kurig & Partner Patentanwälte mbB

(57) **Abstract**

An image processing system includes a processor configured to perform a first printing process of not additionally forming an image on a preprint paper fed as a print medium on which an image is formed in advance; and in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

## Description

### BACKGROUND OF THE INVENTION

### (i) Field of the Invention

The present invention relates to an image processing system, an image processing apparatus, and a program.

### (ii) Description of Related Art

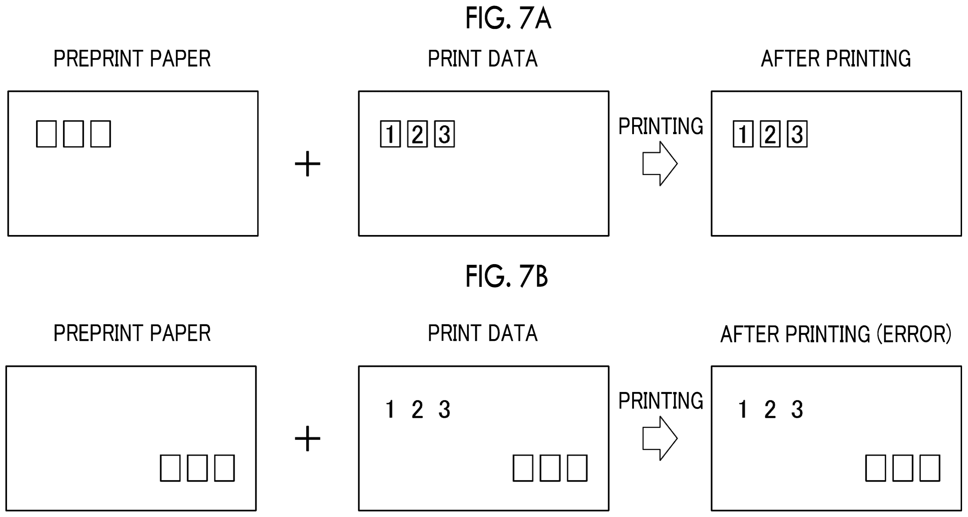

One of the printing processes by an image processing apparatus is called "reprinting" in which an image of print data is additionally formed on a preprint paper which is a print medium on which an image is formed in advance (for example, refer to FIG. 7A). In reprinting, since the front and back and the orientation are limited in a case of forming an image on the surface of the preprint paper, in a case where the front and back or the orientation is incorrect during feeding (for example, refer to FIG. 7B), an intended printing result cannot be obtained, and an error occurs. In addition, not only that, but also the preprint paper, which has a high procurement cost compared to a normal print medium, is wasted, and thus the loss may be huge depending on the amount of wasted preprint paper. On the other hand, the image processing apparatus has a complicated mechanism that rotates the front and back and the orientation of the preprint paper and discharges the preprint paper, and it is common that the setting of such a mechanism is different for each user. Therefore, when feeding, it is difficult for the user to intuitively predict the relationship between the front and back and the orientation of the preprint paper when feeding and the front and back and the orientation of the preprint paper when discharged.

As a related art for such a problem, for example, JP2011-81687A discloses a technique of printing a patch for determining the orientation of the preprint paper outside an image region in a first pass and detecting the patch in a second pass to determine the front and back and the orientation of the preprint paper.

### SUMMARY OF THE INVENTION

However, there is a demand for suppressing the loss of preprint paper due to a feeding error without forming an image for determining the front and back and the orientation of the preprint paper on the preprint paper.

An object of the present invention is to suppress the loss of the preprint paper due to a feeding error without forming an image for determining the front and back and the orientation of the preprint paper on the preprint paper.

According to a first aspect of the present invention, there is provided an image processing system including: a processor configured to: perform a first printing process of not additionally forming an image on a preprint paper fed as a print medium on which an image is formed in advance; and in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

According to a second aspect of the present invention, there is provided the image processing system according to the first aspect, in which the processor may be configured to: change at least one of a front and back or an orientation of print data to be subjected to the second printing process in accordance with a front and back and an orientation of the second read image, as the process of eliminating the difference.

According to a third aspect of the present invention, there is provided the image processing system according to the second aspect, in which the processor may be configured to: further change at least one of a front and back or an orientation of the first read image in accordance with the front and back and the orientation of the second read image; and verify presence or absence of a difference between a composite image, which is obtained by combining the changed print data and the first read image, and a third read image obtained by reading the preprint paper on which the second printing process is performed.

According to a fourth aspect of the present invention, there is provided the image processing system according to the third aspect, in which the processor may be configured to: manage a required time for changing the print data and the first read image in accordance with the front and back and the orientation of the second read image.

According to a fifth aspect of the present invention, there is provided the image processing system according to any one of the first to fourth aspects, in which the processor may be configured to: output alert information for notifying a user that feeding of the preprint paper is not being performed correctly, as the process of eliminating the difference.

According to a sixth aspect of the present invention, there is provided the image processing system according to the fifth aspect, in which the processor may be configured to: further output, together with the alert information, guide information for guiding a method of correcting the feeding of the preprint paper.

According to a seventh aspect of the present invention, there is provided the image processing system according to any one of the first to sixth aspects, in which the processor may be configured to: display a user interface that receives an operation of selecting whether or not to verify presence or absence of the difference.

According to an eighth aspect of the present invention, there is provided the image processing system according to the seventh aspect, in which the user interface may further receive an operation of selecting the process of eliminating the difference.

According to a ninth aspect of the present invention, there is provided the image processing system according to the eighth aspect, in which the user interface may further receive an input operation for setting an upper limit value of a required time for a change in a case where a process of changing at least one of a front and back or an orientation of print data to be subjected to the second printing process is selected in accordance with a front and back and an orientation of the second read image, as the process of eliminating the difference.

According to a tenth aspect of the present invention, there is provided the image processing system according to the ninth aspect, in which the processor may be configured to: set the upper limit value that is input; and, in a case where an actual required time exceeds the upper limit value, output alert information for notifying a user that feeding of the preprint paper is not being performed correctly, as the process of eliminating the difference.

According to an eleventh aspect of the present invention, there is provided an image processing apparatus including a processor configured to: perform a first printing process of not additionally forming an image on a preprint paper fed as a print medium on which an image is formed in advance; and in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

According to a twelfth aspect of the present invention, there is provided a program executed by a computer that controls an image processing apparatus, the program causing the computer to realize: a function of performing a first printing process of not additionally forming an image on a preprint paper fed as a print medium on which an image is formed in advance; and a function of performing, in a case where there is a difference between a first read image obtained by reading the preprint paper and a second read image obtained by reading the preprint paper on which the first printing process is performed, a second printing process of forming an image on the preprint paper after performing a process of eliminating the difference.

According to the first aspect of the present invention, it is possible to suppress the loss of the preprint paper due to a feeding error without forming an image for determining the front and back and the orientation of the preprint paper on the preprint paper.

According to the second aspect of the present invention, since the front and back and the orientation of the print data are changed in accordance with the front and back and the orientation of the second read image, it is possible to eliminate the difference between the first read image and the second read image.

According to the third aspect of the present invention, it is possible to verify the result of the second printing process based on the difference between the composite image and the third read image.

According to the fourth aspect of the present invention, it is possible to select the process of eliminating the difference between the first read image and the second read image according to the required time for changing the print data and the first read image in accordance with the front and back and the orientation of the second read image.

According to the fifth aspect of the present invention, the user can learn that the feeding of the preprint paper is not being performed correctly before the second printing is started.

According to the sixth aspect of the present invention, the user can learn the method of correcting the feeding of the preprint paper before the second printing is started.

According to the seventh aspect of the present invention, since whether or not to verify the presence or absence of the difference between the first read image and the second read image can be selected on a user side, it is possible to respond to the actual situation of a printing field.

According to the eighth aspect of the present invention, since the process of eliminating the difference between the first read image and the second read image can be selected on the user side, it is possible to respond to the actual situation of the printing field.

According to the ninth aspect of the present invention, since the upper limit value of the required time for changing the print data in accordance with the front and back and the orientation of the second read image can be set on the user side, it is possible to respond to the actual situation of the printing field.

According to the tenth aspect of the present invention, in a case where the actual required time exceeds the upper limit value of the required time for changing the print data in accordance with the front and back and the orientation of the second read image, it is possible to save the printing time by causing the user to correct the feeding without changing the print data.

According to the eleventh aspect of the present invention, it is possible to suppress the loss of the preprint paper due to a feeding error without forming an image for determining the front and back and the orientation of the preprint paper on the preprint paper.

According to the twelfth aspect of the present invention, it is possible to suppress the loss of the preprint paper due to a feeding error without forming an image for determining the front and back and the orientation of the preprint paper on the preprint paper.

### BRIEF DESCRIPTION OF THE DRAWINGS

Exemplary embodiment(s) of the present invention will be described in detail based on the following figures, wherein:
FIG. 1 is a diagram illustrating an example of an overall configuration of an image processing system to which the present exemplary embodiment is applied;
FIG. 2 is a diagram illustrating an example of a hardware configuration of an image processing apparatus configuring the image processing system of FIG. 1;
FIG. 3 is a diagram illustrating an example of a functional configuration of a control unit of the image processing apparatus;
FIG. 4 is a flowchart illustrating an example of a flow of a process of the image processing apparatus;
FIG. 5 is a diagram showing a specific example of a process of the image processing apparatus;
FIG. 6 is a diagram showing a specific example of a user selection UI; and
FIGS. 7A and 7B are diagrams showing specific examples of "reprinting".

### DETAILED DESCRIPTION OF THE INVENTION

Hereinafter, exemplary embodiments of the present invention will be described in detail with reference to the accompanying drawings.

### <Configuration of Image Processing System 1>

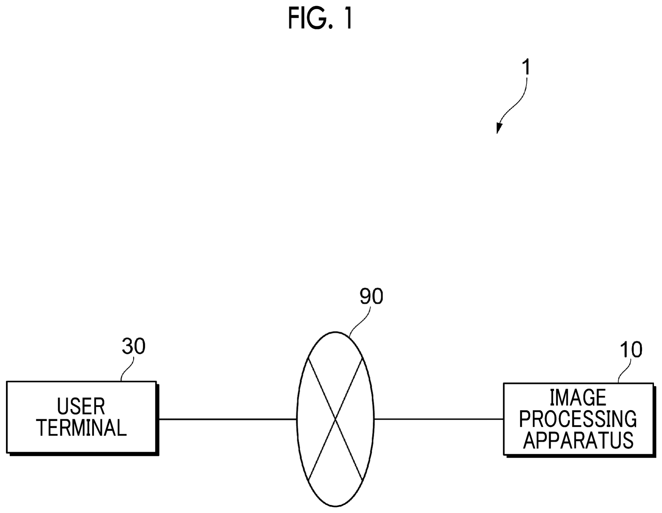

FIG. 1 is a diagram illustrating an example of an overall configuration of an image processing system 1 to which the present exemplary embodiment is applied.

The image processing system 1 is a system that can eliminate a problem before the printing process is performed even though a front and back or an orientation is incorrect in a case of feeding a preprint paper which is a print medium on which an image is formed in advance. The preprint paper is not particularly limited. For example, an envelope or paper on which a postal code frame is printed is an example of the preprint paper. In addition, the image to be additionally formed is not particularly limited. For example, in a case where the preprint paper is an envelope in which a postal code frame is printed in advance, the postal code printed inside the postal code frame is the "image to be additionally formed".

As shown in FIG. 1, the image processing system 1 is configured by connecting an image processing apparatus 10 and a user terminal 30 via a network 90. The network 90 is, for example, a local area network (LAN) or the Internet. Hereinafter, the image processing apparatus 10 and the user terminal 30 configuring the image processing system 1 will be described.

### [Image Processing Apparatus 10]

The image processing apparatus 10 performs various types of processes according to an input operation of a user who uses the image processing system 1. For example, the image processing apparatus 10 can execute a printing process of forming and outputting an image on paper or the like as a recording medium, a copying process of copying and outputting an image of an original document on paper or the like, a reading process of reading an image formed on paper or the like, a process of transmitting an original document by a facsimile, and the like. The image processing apparatus 10 includes, for example, a so-called electrophotographic type multifunction machine that forms a toner image on a printing surface of paper and a so-called inkjet type printer that discharges ink onto a printing surface of paper.

The image processing apparatus 10 has an operation screen as a user interface, and can acquire input information input to the operation screen and execute various types of processes. In addition, the image processing apparatus 10 can acquire various types of information transmitted from the user terminal 30 connected to the image processing apparatus 10 via the network 90 and from the outside, and execute various types of processes. In addition, the image processing apparatus 10 can transmit various types of information to the user terminal 30 and the outside.

For example, the image processing apparatus 10 registers a combination of a read image of an image (hereinafter, referred to as a "first read image") formed on the preprint paper read in advance and print data to be printed on the preprint paper. The first read image includes a read image obtained by reading images formed on each of the front surface and the back surface of the preprint paper. In addition, the content to be registered includes a correspondence relationship between the orientation of the first read image and the orientation of the print data.

In a case where the preprint paper is fed to the paper feeding tray of the image processing apparatus 10, the image processing apparatus 10 performs a printing process of not additionally forming an image on the fed preprint paper (hereinafter, referred to as a "first printing process"). Specifically, the image processing apparatus 10 performs a printing process of not adhering toner or ink as the first printing process on the fed preprint paper.

The image processing apparatus 10 reads the image formed on the preprint paper on which the first printing process is performed. Hereinafter, the read image of the image formed on the preprint paper read after the first printing process is referred to as a "second read image". The image processing apparatus 10 verifies the presence or absence of a difference between the first read image and the second read image, and in a case where there is no difference, performs a printing process of additionally forming an image of the print data on the preprint paper (hereinafter, referred to as a "second printing process").

On the other hand, in a case where there is a difference between the first read image and the second read image, the image processing apparatus 10 performs a process of eliminating the difference. Here, the difference between the first read image and the second read image is a difference in front and back or a difference in orientation. The image processing apparatus 10 changes at least one of the front and back or the orientation of the print data to be subjected to the second printing process in accordance with the front and back and the orientation of the second read image as the process of eliminating the difference between the first read image and the second read image. Further, the image processing apparatus 10 changes at least one of the front and back or the orientation of the first read image in accordance with the front and back and the orientation of the second read image.

In the present exemplary embodiment, it is assumed that a process of changing at least one of the front and back or the orientation of each of the print data and the first read image is to perform again a Raster Image Processor (RIP) process of converting the print data into a raster image that can be understood by the image processing apparatus 10. Therefore, in the following, the process of performing the RIP process again in accordance with the front and back and the orientation of the second read image is referred to as "re-RIP".

In a case where the re-RIP is performed in accordance with the front and back and the orientation of the second read image as the process of eliminating the difference between the first read image and the second read image, the image processing apparatus 10 performs a second printing process of additionally forming an image of the print data on the preprint paper. Then, the image processing apparatus 10 generates a composite image in which the print data after the re-RIP and the first read image are combined.

The image processing apparatus 10 reads the image formed on the preprint paper on which the second printing process is performed. Hereinafter, the read image of the image formed on the preprint paper read after the second printing process is referred to as a "third read image". The image processing apparatus 10 verifies the presence or absence of a difference between the composite image and the third read image. Here, the difference between the composite image and the third read image is a difference in front and back or a difference in orientation.

In a case where there is no difference between the composite image and the third read image, the image processing apparatus 10 notifies the user that the second printing process is successful. For example, the image processing apparatus 10 outputs information (text data or audio data) indicating that the second printing process is successful to notify the user. On the other hand, in a case where there is a difference between the composite image and the third read image, the image processing apparatus 10 outputs information (text data or audio data) indicating that the second printing process fails to notify the user.

The image processing apparatus 10 manages a required time in a case where the re-RIP is performed in accordance with the front and back and the orientation of the second read image. The required time is calculated and managed based on, for example, information such as the record of the re-RIP performed in the past, the content and capacity of the print data, the aspect of the preprint paper, and the performance of the image processing apparatus 10. Hereinafter, the required time for the re-RIP will be referred to as a "re-RIP time".

In addition, the image processing apparatus 10 can output alert information for notifying the user that the feeding of the preprint paper is not being performed correctly, as the process of eliminating the difference between the first read image and the second read image. In addition, the image processing apparatus 10 can output information for guiding the user in a method of correcting the feeding of the preprint paper (hereinafter, referred to as "guide information"), together with the alert information.

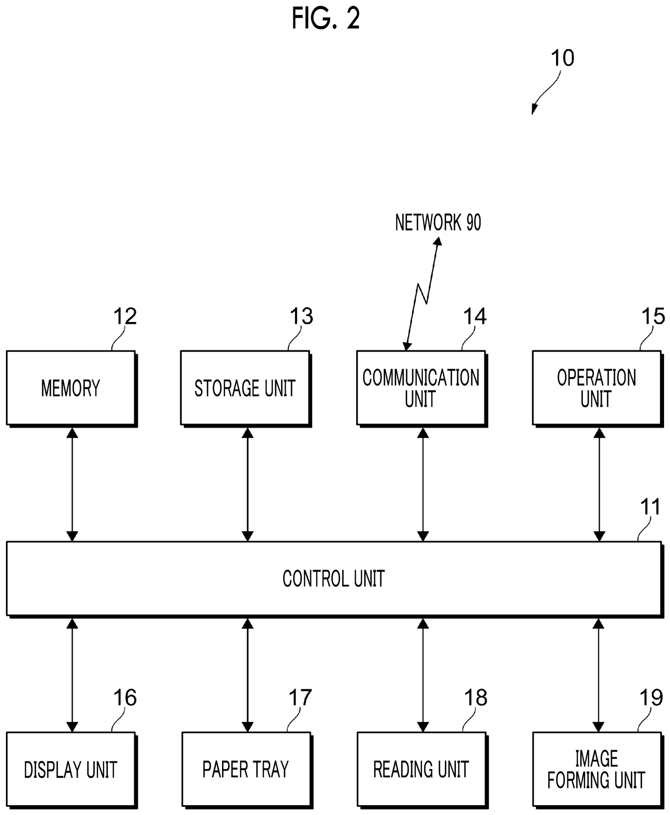

In addition, the image processing apparatus 10 can allow the user to select whether or not to verify the presence or absence of a difference between the first read image and the second read image before starting the second printing process. For example, the image processing apparatus 10 displays a user interface (hereinafter, referred to as a "user selection UI") that enables selection of whether or not to verify the presence or absence of a difference between the first read image and the second read image. In this case, the image processing apparatus 10 decides whether or not to verify the presence or absence of a difference between the first read image and the second read image according to the content input to the user selection UI. The user selection UI may be displayed on the display unit 16 (refer to FIG. 2) of the image processing apparatus 10 or may be displayed on the display unit of the user terminal 30.

In addition, the user selection UI may enable selection of the process of eliminating the difference between the first read image and the second read image in addition to enable selection of whether or not to verify the presence or absence of the difference between the first read image and the second read image. In this case, the image processing apparatus 10 decides a process of eliminating the difference between the first read image and the second read image according to the content input to the user selection UI.

In addition, in a case where the re-RIP is selected to be performed in accordance with the front and back and the orientation of the second read image as the process of eliminating the difference between the first read image and the second read image, the user selection UI may allow an upper limit value of the re-RIP time to be set. In this case, in a case where an actual re-RIP time exceeds a value (hereinafter, referred to as a "set time") set as the upper limit value of the re-RIP time, the image processing apparatus 10 can perform the following process as the process of eliminating the difference between the first read image and the second read image. That is, the image processing apparatus 10 outputs alert information for notifying the user that the feeding of the preprint paper is not being performed correctly. A specific example of the user selection UI and details of a configuration and a process of the image processing apparatus 10 will be described below.

### [User Terminal 30]

The user terminal 30 is an information processing apparatus such as a smartphone, a tablet terminal, or a personal computer operated by the user who uses the image processing system 1. The user terminal 30 is installed with application software that enables the generation of print data, the issuance of an instruction to execute the printing process or the like to the image processing apparatus 10 via the operation screen as the user interface. Such application software enables the display of the above-described user selection UI on the display.

The user terminal 30 can transmit various types of information to the image processing apparatus 10 and the outside. For example, the user terminal 30 can generate the print data based on the input operation of the user and transmit the print data to the image processing apparatus 10. In addition, the user terminal 30 can transmit various types of input information input by the user to the image processing apparatus 10.

In addition, the user terminal 30 can acquire various types of information transmitted from the image processing apparatus 10 and the outside, and execute various types of processes. For example, the user terminal 30 can output the alert information, the guide information, the information indicating that the second printing process is successful, and the like, which are transmitted from the image processing apparatus 10.

The configuration of the above-described image processing system 1 is an example, and the image processing system 1 as a whole may have a function of realizing the above-described processes. Therefore, a part or all of the functions for realizing the process described above may be shared or cooperated in the image processing system 1. That is, some or all of the functions of the image processing apparatus 10 configuring the image processing system 1 may be used as the functions of another apparatus (for example, the user terminal 30). In addition, some or all of the functions of other apparatuses may be functions of the image processing apparatus 10. Further, a part or all of the functions of the image processing apparatus 10 or other apparatuses which configure the image processing system 1 may be transferred to another server (not illustrated). Accordingly, the process of the image processing system 1 as a whole may be accelerated, and, in addition, the processing can also be complemented.

### <Hardware Configuration>

### [Hardware Configuration of Image Processing Apparatus 10]

FIG. 2 is a diagram illustrating an example of a hardware configuration of the image processing apparatus 10 configuring the image processing system 1 of FIG. 1.

The image processing apparatus 10 includes a control unit 11, a memory 12, a storage unit 13, a communication unit 14, an operation unit 15, a display unit 16, a paper tray 17, a reading unit 18, and an image forming unit 19. The above units are connected to each other via a data bus, an address bus, a Peripheral Component Interconnect (PCI) bus, or the like.

The control unit 11 is a processor that performs control on the functions of the image processing apparatus 10 based on execution of various types of software such as an OS (basic software) and application software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other.

The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The memory 12 is a storage region in which various types of software, pieces of data used for executing the software, or the like are stored, and is used as a work area in calculations. The memory 12 is configured of, for example, a random access memory (RAM).

The storage unit 13 is a storage region in which input data for various types of software, output data from various types of software, or the like are stored. The storage unit 13 is configured of, for example, a hard disk drive (HDD), a solid state drive (SSD), or a semiconductor memory, which is used for storing programs, various types of setting data, or the like. The storage unit 13 is provided with a database that stores various types of information.

The communication unit 14 transmits and receives data to and from the user terminal 30 and the outside via the network 90. The operation unit 15 is configured of, for example, a keyboard, a mouse, a mechanical button, or a switch, and receives an input operation.

The operation unit 15 also includes a touch sensor integrally configuring a touch panel with the display unit 16.

The display unit 16 is configured of, for example, a liquid crystal display or an organic electro luminescence (EL) display to be used for information display, and displays data of an image or a text and the like. The display unit 16 displays a user interface or the like.

The paper tray 17 is a mechanism that can stack and store paper to be used for printing, is disposed inside the image processing apparatus 10, or is disposed outside the image processing apparatus 10. The paper tray 17 corresponds to, for example, various paper sizes such as A4, A3, letter size, and envelopes. The paper tray 17 includes a paper feeding tray (also referred to as an "input tray"), a paper discharge tray (also referred to as an "output tray"), a manual feed tray, and the like.

The paper feeding tray is a tray on which paper before printing can be stacked. In many cases, paper having different sizes and types are simultaneously stacked on each of the plurality of papers feeding trays. The paper discharge tray is a tray from which paper on which the printing is completed is discharged. The manual feed tray is an auxiliary tray used in a case of printing a small amount of special paper (for example, thick paper or the like). The paper tray 17 in the present exemplary embodiment is a paper feeding tray, and is configured to enable continuous printing by stacking one to several hundreds of sheets of paper.

The reading unit 18 reads an image recorded on a medium such as paper. The reading unit 18 may be configured of, for example, a Charge Coupled Devices (CCD) type scanner that reduces reflected light with respect to light emitted from a light source to an original document with a lens and receives the reflected light with a CCD. In addition, the reading unit 18 may be configured of a Contact Image Sensor (CIS) type scanner or the like that receives reflected light with a CIS with respect to light emitted in order from an LED light source to an original document. The reading unit 18 can read the image formed on the preprint paper.

The image forming unit 19 forms an image to be printed on a printing surface of paper as a recording medium by, for example, an electrophotographic method, an inkjet method, or the like. The image forming unit 19 can perform first printing in which the image of the print data is not formed on the preprint paper by not allowing the toner or the ink to adhere to the preprint paper. In addition, the image forming unit 19 can perform second printing in which the image of the print data is formed on the preprint paper by allowing the toner or the ink to adhere to the preprint paper.

### [Hardware Configuration of User Terminal 30]

The user terminal 30 includes a control unit, a memory, a storage unit, a communication unit, an operation unit, and a display unit respectively corresponding to the control unit 11, the memory 12, the storage unit 13, the communication unit 14, the operation unit 15, and the display unit 16 shown in FIG. 2. These units are connected to each other via a data bus, an address bus, a PCI bus, or the like.

### <Functional Configuration>

### [Functional Configuration of Image Processing Apparatus 10]

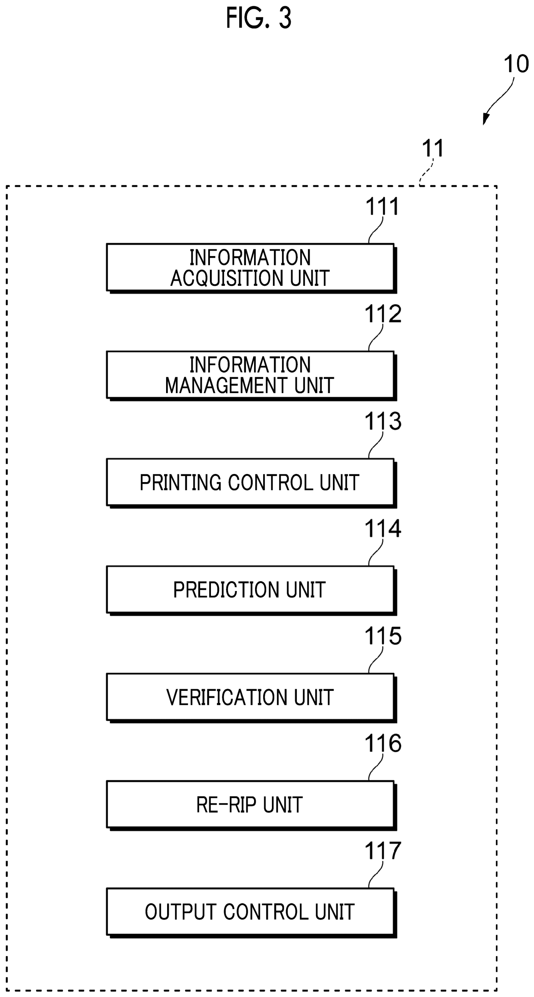

FIG. 3 is a diagram illustrating an example of a functional configuration of the control unit 11 of the image processing apparatus 10.

In the control unit 11 of the image processing apparatus 10, an information acquisition unit 111, an information management unit 112, a printing control unit 113, a reading control unit 114, a verification unit 115, a re-RIP unit 116, and an output control unit 117 function.

The information acquisition unit 111 acquires various types of information. For example, the information acquisition unit 111 acquires input information input to an operation screen (for example, a user selection UI) displayed on the display unit 16 (refer to FIG. 2). In addition, the information acquisition unit 111 acquires the read image read by the reading unit 18 (refer to FIG. 2). For example, the information acquisition unit 111 acquires a first read image generated by reading an image formed in advance on the preprint paper by the reading unit 18 for the pre-registration.

In addition, the information acquisition unit 111 acquires a second read image generated by reading the image formed in advance on the preprint paper by the reading unit 18 after the first printing process. In addition, the information acquisition unit 111 acquires a third read image generated by reading the image formed on the preprint paper by the reading unit 18 after the second printing process.

In addition, the information acquisition unit 111 acquires various types of information transmitted from the user terminal 30. Here, the information transmitted from the user terminal 30 is, for example, print data, various types of input information input to the user terminal 30, and the like.

The information management unit 112 stores and manages various types of information in the database of the storage unit 13 (refer to FIG. 2). For example, the information management unit 112 stores and manages information, such as the first read image or the print data acquired by the information acquisition unit 111, in a database.

The printing control unit 113 performs a control of causing the image forming unit 19 (refer to FIG. 2) to execute the first printing process based on the input information input to the user selection UI. In addition, the printing control unit 113 performs control of causing the image forming unit 19 to execute the second printing process based on input information transmitted from the user terminal 30 and input for performing the second printing process.

The reading control unit 114 performs control of causing the reading unit 18 (refer to FIG. 2) to read various images formed on paper or the like. The image read by the reading unit 18 under the control of the reading control unit 114 is, for example, an image formed on preprint paper, or the like.

The verification unit 115 verifies the presence or absence of a difference between the first read image and the second read image. The verification unit 115 may decide whether or not to verify the presence or absence of a difference between the first read image and the second read image according to the content input to the user selection UI. In addition, the verification unit 115 may automatically verify the presence or absence of a difference between the first read image and the second read image.

In addition, the verification unit 115 generates a composite image in which the print data after the re-RIP performed by the re-RIP unit 116 described below and the first read image are combined, and verifies the presence or absence of a difference between the generated composite image and the third read image.

The re-RIP unit 116 performs re-RIP in accordance with the front and back and the orientation of the second read image. The re-RIP unit 116 may be configured to perform the re-RIP in accordance with the front and back and the orientation of the second read image in a case where the re-RIP is selected to be performed by the user. In this case, the selection of performing the re-RIP is performed by an input operation to the user selection UI.

In addition, in a case where the upper limit value of the re-RIP time is set by the user, the re-RIP unit 116 performs the following process as the process of eliminating the difference between the first read image and the second read image. That is, in a case where the actual re-RIP time does not exceed the set time, the re-RIP unit 116 performs the re-RIP in accordance with the front and back and the orientation of the second read image. On the other hand, in a case where the actual re-RIP time exceeds the set time, the re-RIP unit 116 does not perform the re-RIP.

The output control unit 117 performs control to output various types of information. For example, in a case where the actual re-RIP time exceeds the set time, the output control unit 117 performs control of outputting alert information. In addition, the output control unit 117 performs control of outputting the guide information for guiding the user in a method of correcting the feeding of the preprint paper, together with the alert information. In addition, in a case in which the second printing process is successful, the output control unit 117 performs control to output information indicating that the second printing process is successful. In this case, the output control unit 117 may cause the image processing apparatus 10 to output each of the alert information, the guide information, and the information indicating that the second printing process is successful, or may cause the user terminal 30 to output each of the information.

### <Flow of Process of Image Processing Apparatus 10>

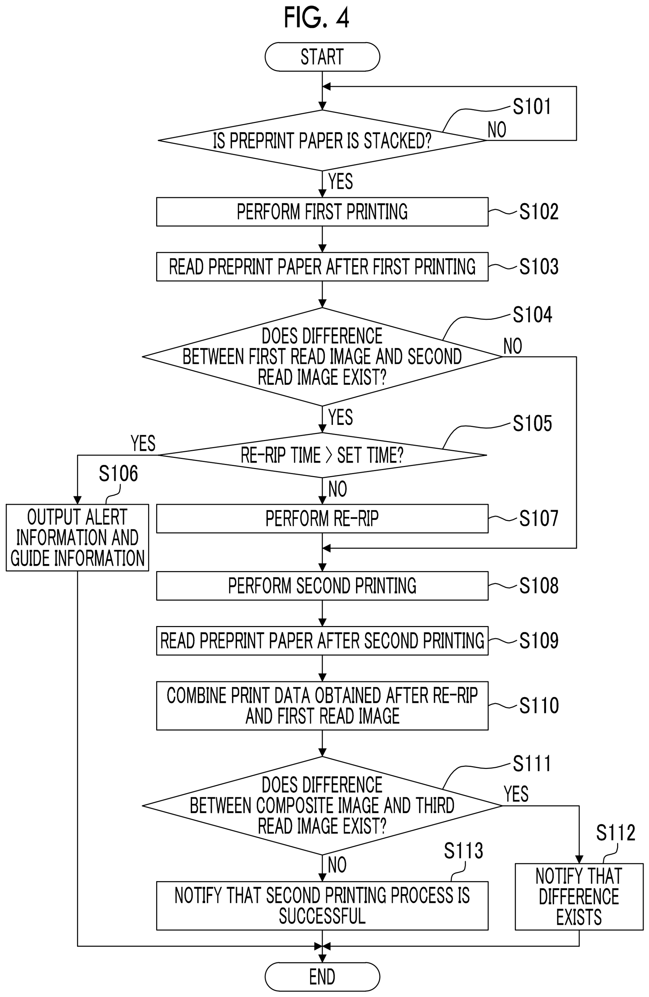

FIG. 4 is a flowchart illustrating an example of a flow of a process of the image processing apparatus 10. In the example of FIG. 4, it is assumed that the selection of whether or not to verify the presence or absence of a difference between the first read image and the second read image and the setting of the upper limit value of the re-RIP time (that is, the set time) are performed in advance. In addition, it is assumed that the first read image of the preprint paper is generated and managed in advance.

In a case where the preprint paper is stacked on the paper feeding tray of the paper tray 17 (refer to FIG. 2) (YES in step S101), the image processing apparatus 10 performs first printing (step S102). Then, the image processing apparatus 10 reads the preprint paper after the first printing (step S103). As a result, the second read image is generated. On the other hand, in a case where the preprint paper is not stacked in the paper feeding tray (NO in step S101), the image processing apparatus 10 repeats the determination process of step S101.

The image processing apparatus 10 verifies the presence or absence of a difference between the first read image and the second read image. In a case where a difference between the first read image and the second read image exists (YES in step S104), the image processing apparatus 10 proceeds to the determination process of step S105. On the other hand, in a case where the difference between the first read image and the second read image does not exist (NO in step S104), the image processing apparatus 10 performs second printing (step S108) and proceeds to the process of step S109.

In a case where an actual re-RIP time exceeds the set time (YES in step S105), the image processing apparatus 10 outputs the alert information and the guide information (step S106), and ends the process (END). In this case, the user corrects the feeding of the preprint paper stacked in the paper feeding tray while referring to the guide information. On the other hand, in a case where the actual re-RIP time does not exceed the set time (NO in step S105), the image processing apparatus 10 proceeds to the process of step S107.

The image processing apparatus 10 performs the re-RIP in accordance with the front and back and the orientation of the second read image (step S107), and then performs the second printing (step S108). Specifically, for example, the image processing apparatus 10 performs the second printing after changing at least one of the front and back or the orientation of the print data and the first read image in accordance with the front and back and the orientation of the second read image.

The image processing apparatus 10 reads the preprint paper after the second printing (step S109). As a result, the third read image is generated. The image processing apparatus 10 combines the print data obtained after the re-RIP is performed and the first read image (step S110). As a result, the composite image is generated.

The image processing apparatus 10 verifies the presence or absence of a difference between the composite image and the third read image. In a case where a difference between the composite image and the third read image exists (YES in step S111), the image processing apparatus 10 notifies the user that a difference exists (step S112), and ends the process (END). On the other hand, in a case where a difference between the composite image and the third read image does not exist (NO in step S111), the image processing apparatus 10 notifies the user that the second printing process is successful (step S113), and ends the process (END).

### <Specific Example>

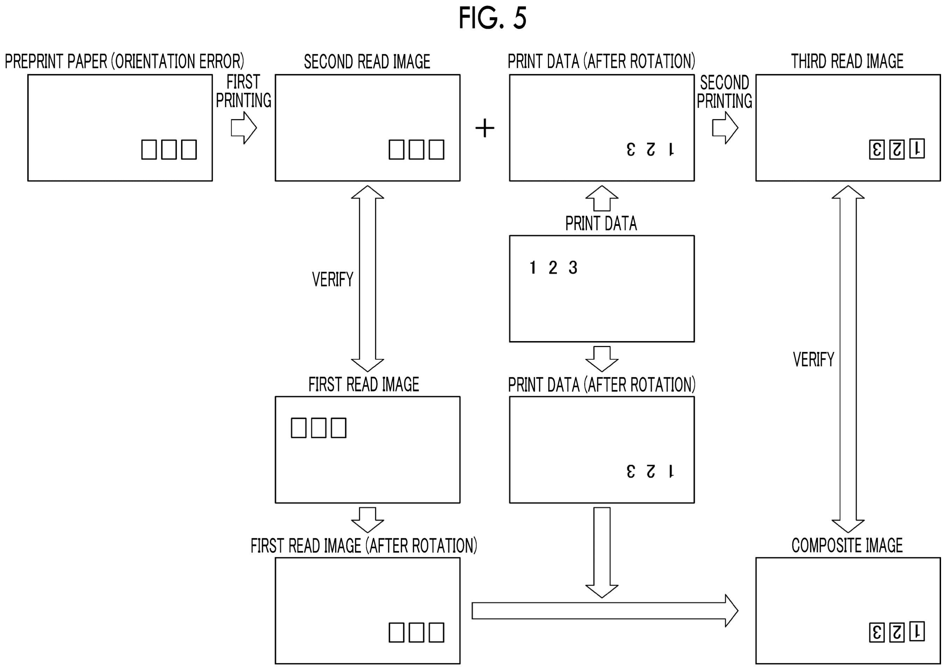

FIG. 5 is a diagram showing a specific example of a process of the image processing apparatus 10. In the example of FIG. 5, it is assumed that the preprint paper is an envelope in which a three-digit number frame is printed in advance, and the print data is a three-digit number printed inside the number frame of the preprint paper. In addition, it is assumed that the first read image of the preprint paper is generated and managed in advance, and the actual re-RIP time does not exceed the set time.

Under such a situation, as shown in FIG. 5, in a case where the preprint paper is fed upside down by mistake instead of the original orientation, the following process by the image processing apparatus 10 (refer to FIG. 1) is performed. That is, the image processing apparatus 10 performs the first printing. Then, the image processing apparatus 10 reads the preprint paper after the first printing to generate a second read image. Next, the image processing apparatus 10 verifies the presence or absence of a difference between the first read image that is managed in advance and the generated second read image.

In the example of FIG. 5, since the orientation of the first read image in the up-down direction and the orientation of the second read image in the up-down direction are different, the image processing apparatus 10 performs the re-RIP in accordance with the orientation of the second read image. Specifically, the image processing apparatus 10 rotates the orientation of the print data and the first read image by 180 degrees in accordance with the orientation of the second read image. As a result, as shown in FIG. 5, a difference between the orientation of the print data in the up-down direction after the rotation and the orientation of the first read image in the up-down direction after the rotation does not exist.

The image processing apparatus 10 performs the second printing and reads the preprint paper after the second printing. As a result, the third read image is generated. As shown in FIG. 5, in the third read image, a three-digit number "123" which is the print data is contained inside the three-digit number frame printed in advance on the preprint paper. In addition, the image processing apparatus 10 combines the print data after being rotated by 180 degrees with the first read image. As a result, the composite image is generated. As shown in FIG. 5, in the composite image, the three-digit number "123" which is the print data is contained inside the three-digit number frame printed in advance on the preprint paper.

The image processing apparatus 10 verifies the presence or absence of a difference between the composite image and the third read image. In the example of FIG. 5, since a difference between the composite image and the third read image does not exist, the image processing apparatus 10 notifies the user that the second printing process is successful.

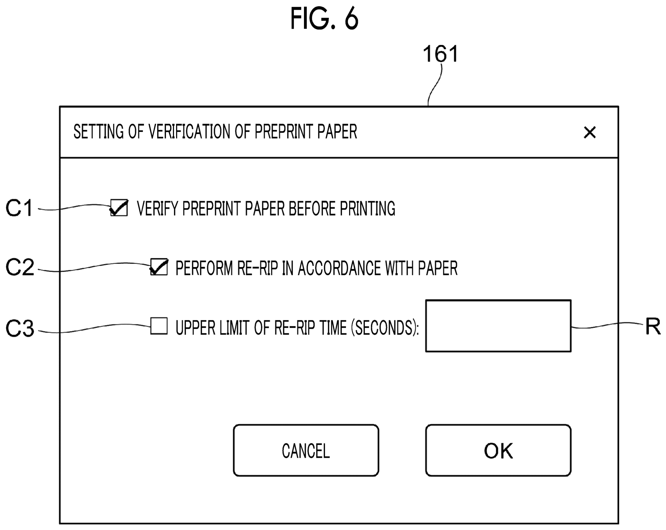

FIG. 6 is a diagram showing a specific example of the user selection UI 161.

In the user selection UI 161 shown in FIG. 6, a label of "setting of verification of preprint paper" and a check box C1 with a label of "verification of preprint paper before printing" are displayed. In a case where the user verifies the presence or absence of a difference between the first read image and the second read image, the user checks the check box C1. In the example of FIG. 6, since the check box C1 is checked, the verification of the presence or absence of the difference between the first read image and the second read image is performed.

In addition, a check box C2 labeled "perform re-RIP in accordance with paper" is displayed below the check box C1. In a case where the user performs the re-RIP in accordance with the front and back and the orientation of the second read image, the user checks the check box C2. On the other hand, in a case where the user corrects the feeding of the preprint paper by himself/herself in a case where a difference between the first read image and the second read image exists, the user does not check the check box C2. In the example of FIG. 6, since the check box C2 is checked, the re-RIP is performed in accordance with the front and back and the orientation of the second read image.

In addition, a check box C3 labeled "Upper limit of re-RIP time (seconds)" and an input field R for inputting the set time are displayed below the check box C2. In a case where the upper limit value of the re-RIP time (that is, the set time) is set, the user checks the check box C3 and inputs the set time in the input field R. On the other hand, in a case where the upper limit value of the re-RIP time is not set, the check box C3 is not checked. In the example of FIG. 6, since the check box C3 is not checked, the re-RIP is performed regardless of the re-RIP time.

### <Other Exemplary Embodiments>

While the present exemplary embodiments have been described above, the present invention is not limited to the exemplary embodiments. In addition, effects of the present invention are not limited to the effects disclosed in the exemplary embodiments. For example, both the overall configuration of the image processing system 1 shown in FIG. 1 and the hardware configuration of the image processing apparatus 10 shown in FIG. 2 are merely examples for achieving the purpose of the present invention, and are not particularly limited.

In addition, the functional configuration of the image processing apparatus 10 shown in FIG. 3 is merely an example and is not particularly limited. As long as the image processing system 1 in FIG. 1 is provided with a function with which the above processing can be executed as a whole, a functional configuration to be used to implement the function is not limited to the example in FIG. 3. In addition, the order of the steps of the process of the image processing apparatus 10 illustrated in the flowchart of FIG. 4 is merely an example and is not particularly limited. Not only the processing is performed in time series along the illustrated order of the steps, but also the processing may not be performed in time series and may be performed in parallel or individually. In addition, the specific examples shown in FIGS. 5 and 6 are merely examples and are not particularly limited.

For example, in the above-described exemplary embodiment, the preprint paper is one sheet, but a plurality of sheets of preprint paper may be used. For example, the preprint paper may be a set of three sheets. In this case, the print data corresponding to the first preprint paper, the print data corresponding to the second preprint paper, and the print data corresponding to the third preprint paper are present, but the re-RIP is performed in a unit of a set.

The present invention can also be applied to a program and a program product.

### (Supplementary Note)

### (((1)))

An image processing system comprising: a processor configured to:
   perform a first printing process of not additionally forming an image on a preprint paper fed as a print medium on which an image is formed in advance; and
   in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

### (((2)))

The image processing system according to (((1))), wherein the processor is configured to:
change at least one of a front and back or an orientation of print data to be subjected to the second printing process in accordance with a front and back and an orientation of the second read image, as the process of eliminating the difference.

### (((3)))

The image processing system according to (((2))), wherein the processor is configured to:
further change at least one of a front and back or an orientation of the first read image in accordance with the front and back and the orientation of the second read image; and
verify presence or absence of a difference between a composite image, which is obtained by combining the changed print data and the first read image, and a third read image obtained by reading the preprint paper on which the second printing process is performed.

### (((4)))

The image processing system according to (((3))), wherein the processor is configured to:
manage a required time for changing the print data and the first read image in accordance with the front and back and the orientation of the second read image.

### (((5)))

The image processing system according to any one of (((1))) to (((4))), wherein the processor is configured to:
output alert information for notifying a user that feeding of the preprint paper is not being performed correctly, as the process of eliminating the difference.

### (((6)))

The image processing system according to (((5))), wherein the processor is configured to:
further output, together with the alert information, guide information for guiding a method of correcting the feeding of the preprint paper.

### (((7)))

The image processing system according to any one of (((1))) to (((6))), wherein the processor is configured to:
display a user interface that receives an operation of selecting whether or not to verify presence or absence of the difference.

### (((8)))

The image processing system according to (((7))),
wherein the user interface further receives an operation of selecting the process of eliminating the difference.

### (((9)))

The image processing system according to (((8))),
wherein the user interface further receives an input operation for setting an upper limit value of a required time for a change in a case where a process of changing at least one of a front and back or an orientation of print data to be subjected to the second printing process is selected in accordance with a front and back and an orientation of the second read image, as the process of eliminating the difference.

### (((10)))

The image processing system according to (((9))), wherein the processor is configured to:
set the upper limit value that is input; and
in a case where an actual required time exceeds the upper limit value, output alert information for notifying a user that feeding of the preprint paper is not being performed correctly, as the process of eliminating the difference.

### (((11)))

An image processing apparatus comprising:
a processor configured to: perform a first printing process of not additionally forming an image on a preprint paper fed as a print medium on which an image is formed in advance; and
in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

### (((12)))

A program executed by a computer that controls an image processing apparatus, the program causing the computer to realize:
a function of performing a first printing process of not additionally forming an image on a preprint paper fed as a print medium on which an image is formed in advance; and
a function of performing, in a case where there is a difference between a first read image obtained by reading the preprint paper and a second read image obtained by reading the preprint paper on which the first printing process is performed, a second printing process of forming an image on the preprint paper after performing a process of eliminating the difference.

According to (((1))), it is possible to suppress the loss of the preprint paper due to a feeding error without forming an image for determining the front and back and the orientation of the preprint paper on the preprint paper.

According to (((2))), since the front and back and the orientation of the print data are changed in accordance with the front and back and the orientation of the second read image, it is possible to eliminate the difference between the first read image and the second read image.

According to (((3))), it is possible to verify the result of the second printing process based on the difference between the composite image and the third read image.

According to (((4))), it is possible to select the process of eliminating the difference between the first read image and the second read image according to the required time for changing the print data and the first read image in accordance with the front and back and the orientation of the second read image.

According to (((5))), the user can learn that the feeding of the preprint paper is not being performed correctly before the second printing is started.

According to (((6))), the user can learn the method of correcting the feeding of the preprint paper before the second printing is started.

According to (((7))), since whether or not to verify the presence or absence of the difference between the first read image and the second read image can be selected on a user side, it is possible to respond to the actual situation of a printing field.

According to (((8))), since the process of eliminating the difference between the first read image and the second read image can be selected on the user side, it is possible to respond to the actual situation of the printing field.

According to (((9))), since the upper limit value of the required time for changing the print data in accordance with the front and back and the orientation of the second read image can be set on the user side, it is possible to respond to the actual situation of the printing field.

According to (((10))), in a case where the actual required time exceeds the upper limit value of the required time for changing the print data in accordance with the front and back and the orientation of the second read image, it is possible to save the printing time by causing the user to correct the feeding without changing the print data.

According to (((11))), it is possible to suppress the loss of the preprint paper due to a feeding error without forming an image for determining the front and back and the orientation of the preprint paper on the preprint paper.

According to (((12))), it is possible to suppress the loss of the preprint paper due to a feeding error without forming an image for determining the front and back and the orientation of the preprint paper on the preprint paper.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image processing system
10: image processing apparatus
11: control unit
12: memory
13: storage unit
14: communication unit
15: operation unit
16: display unit
17: paper tray
18: reading unit
19: image forming unit
30: user terminal
90: network
111: information acquisition unit
112: information management unit
113: printing control unit
114: reading control unit
115: verification unit
116: re-RIP unit
117: output control unit
161: user selection UI

## Claims

1. An image processing system comprising:
a processor configured to:
perform a first printing process of not additionally forming an image on a preprint paper fed as a print medium on which an image is formed in advance; and
in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

2. The image processing system according to claim 1, wherein the processor is configured to:
change at least one of a front and back or an orientation of print data to be subjected to the second printing process in accordance with a front and back and an orientation of the second read image, as the process of eliminating the difference.

3. The image processing system according to claim 2, wherein the processor is configured to:
further change at least one of a front and back or an orientation of the first read image in accordance with the front and back and the orientation of the second read image; and
verify presence or absence of a difference between a composite image, which is obtained by combining the changed print data and the first read image, and a third read image obtained by reading the preprint paper on which the second printing process is performed.

4. The image processing system according to claim 3, wherein the processor is configured to:
manage a required time for changing the print data and the first read image in accordance with the front and back and the orientation of the second read image.

5. The image processing system according to any one of claims 1 to 4, wherein the processor is configured to:
output alert information for notifying a user that feeding of the preprint paper is not being performed correctly, as the process of eliminating the difference.

6. The image processing system according to claim 5, wherein the processor is configured to:
further output, together with the alert information, guide information for guiding a method of correcting the feeding of the preprint paper.

7. The image processing system according to any one of claims 1 to 6, wherein the processor is configured to:
display a user interface that receives an operation of selecting whether or not to verify presence or absence of the difference.

8. The image processing system according to claim 7,
wherein the user interface further receives an operation of selecting the process of eliminating the difference.

9. The image processing system according to claim 8,
wherein the user interface further receives an input operation for setting an upper limit value of a required time for a change in a case where a process of changing at least one of a front and back or an orientation of print data to be subjected to the second printing process is selected in accordance with a front and back and an orientation of the second read image, as the process of eliminating the difference.

10. The image processing system according to claim 9, wherein the processor is configured to:
set the upper limit value that is input; and
in a case where an actual required time exceeds the upper limit value, output alert information for notifying a user that feeding of the preprint paper is not being performed correctly, as the process of eliminating the difference.

11. An image processing apparatus comprising:
a processor configured to:
perform a first printing process of not additionally forming an image on a preprint paper fed as a print medium on which an image is formed in advance; and
in a case where there is a difference between a first read image obtained by reading the preprint paper and a second read image obtained by reading the preprint paper on which the first printing process is performed, perform a second printing process of additionally forming an image on the preprint paper after performing a process of eliminating the difference.

12. A program executed by a computer that controls an image processing apparatus, the program causing the computer to realize:
a function of performing a first printing process of not additionally forming an image on a preprint paper fed as a print medium on which an image is formed in advance; and
a function of performing, in a case where there is a difference between a first read image obtained by reading the preprint paper and a second read image obtained by reading the preprint paper on which the first printing process is performed, a second printing process of forming an image on the preprint paper after performing a process of eliminating the difference.
